# EUROPÄISCHE PATENTSCHRIFT

(11) **EP 0 414 111 B1**
(45) Veröffentlichungstag und Bekanntmachung des Hinweises auf die Patenterteilung: **20.04.1994**
(21) Anmeldenummer: 90115623.2
(22) Anmeldetag: 16.08.1990
(51) Int. Cl.: G11B 5/702

(54) **Magnetischer Aufzeichnungsträger**
Magnetic recording medium
Milieu d'enregistrement magnétique

(30) Priorität: 22.08.1989 DE 3927659
(43) Veröffentlichungstag der Anmeldung: 27.02.1991
(73) Patentinhaber: BASF Aktiengesellschaft, 67063 Ludwigshafen (DE)
(72) Erfinder: Keppeler, Uwe, Dr., D-6700 Ludwigshafen (DE); Bobrich, Michael, Dr., D-6737 Boehl-Iggelheim (DE); Heil, Guenter, Dr., D-6700 Ludwigshafen (DE); Roller, Hermann, D-6700 Ludwigshafen (DE); Lehner, August, D-6701 Roedersheim-Gronau (DE); Lenz, Werner, Dr., D-6702 Bad Duerkheim (DE); Schulz, Guenther, Dr., D-6702 Bad Duerkheim (DE)

(56) Entgegenhaltungen:
- EP-A- 0 142 796
- EP-A- 0 281 873

## Beschreibung

Die Erfindung betrifft magnetische Aufzeichnugsträger, bestehend aus einem nichtmagnetischen Trägermaterial und mindestens einer darauf haftfest aufgebrachten magnetisierbaren Schicht auf Basis eines Polyurethanbindemittels, wobei das Bindemittel zu mindestens 50 Gew.% aus einem verzweigten Polyurethanelastomeren mit Harnstoffgruppen an den Kettenenden besteht.

An magnetische Aufzeichnungsträger werden hinsichtlich der Aufzeichnung, der Wiedergabe und auch der Alterungsbeständigkeit immer höhere Anforderungen gestellt. Um diesen Anforderungen gerecht zu werden kommt dem Bindemittel eine zunehmende Bedeutung zu.

So wird zur Verbesserung der magnetischen Eigenschaften eine erhöhte Packungsdichte des magnetischen Materials in der Schicht angestrebt, was eine Verringerung des Bindemittelanteils in der Schicht zur Folge hat. Ebenso wird versucht ein verbessertes Signal-Rausch-Verhältnis durch die Verwendung immer feinteiligerer magnetischer Materialien mit ausgeprägter Nadelform zu erzielen. Diese Materialien werden zudem zur Verringerung von Alterserscheinungen sehr oft oberflächenmodifiziert. Bedingt durch solche Maßnahmen wird sowohl die Aufteilung der Pigmente im Dispergierprozeß als auch das Erreichen einer guten Dispersionsstabilität erheblich erschwert. Insgesamt müssen die Magnetschichten aber sehr flexibel sein, eine hohe Elastizität aufweisen und eine hohe Reißfestigkeit besitzen. Daneben wird, zur Vermeidung von Pegeleinbrüchen, zunehmend eine Verringerung der Reibungswerte, eine Erhöhung der Abrieb- und Verschleißfestigkeit, gefordert. Des weiteren gilt, daß die mechanische Stabilität der Magnetschicht insbesondere bei hoher Temperatur und hoher Luftfeuchte ebenfalls gewährleistet sein muß.

Für Magnetschichten von Datenmedien (z.B. Floppy Disk) wird darüber hinaus eine gute Lebensdauer hinsichtlich Verschleiß zunehmend zu höheren Werten innerhalb eines weiten Temperaturbereiches von 5 - 40°C gefordert. Dies bedingt den Einsatz größerer Mengen an flüssigen Gleitmitteln in der Bindemittelmatrix als innere Gleitmittel.

Vor allem bei der Herstellung der Beschichtung in frischem Zustand mit geringer Vernetzung und überwiegendem Anteil des Gleitmittels im Inneren der Magnetschicht und nicht an der Oberfläche der Magnetschicht, resultieren daraus auch Nachteile hinsichtlich der Ausbeute an fehlerfreiem Material.

Die erhöhte Menge an innerem Gleitmittel verschlechtert die Haftung der Magnetschicht auf der Folie und die Zähigkeit der Magnetschicht durch Weichmacherwirkung. Als Folge davon erhöht sich die Anzahl der Schichtausrisse bei der Beschichtung und Satinage der Magnetschicht. Diese Nachteile müssen in der Gesamtformulierung der Magnetschichtzusammensetzung durch die Bindemittelkomponenten wieder ausgeglichen werden.

Es ist bekannt, daß Magnetschichten, die starken mechanischen Beanspruchungen unterworfen werden, als Bindemittel sich vorteilhaft erweisende Polyurethanelastomere enthalten. Besonders bewährt haben sich Polyesterurethane, wie sie in der DE-B 1 106 959, DE-B 2 753 694, EP-A 0 069 955 oder in der US-A 2 899 411 beschrieben sind.

Jedoch weisen diese Polyurethane als alleinige Bindemittel oft Nachteile auf. In vielen Fällen wird die Pigmentbenetzung und -dispergierung ungünstig beeinflußt, so daß eventuelle Versinterungen beim Mahlprozeß nur ungenügend zerteilt werden oder eine Agglomeration der Pigmentteilchen nicht ausreichend verhindert wird, was zu schlechter Ausrichtbarkeit und damit zu verringerten Packungsdichten führt. Ein weiterer Nachteil der genannten Polyurethane ist, daß die erforderlichen Elastizität häufig mit einer zu geringen Härte und einer Tendenz zur Oberflächenklebrigkeit einhergeht. Es ist daher allgemein üblich, entsprechenden Polyurethane mit anderen Bindemitteln zu kombinieren. Vorgeschlagene Bindemittel-Kombinationen, z.B. Mischungen aus Polyurethanen mit Phenoxyharzen gemäß DE-B 1 295 011, mit Vinylidenchlorid-Acrylnitril-Copolymerisaten entsprechend DE-B 2 037 605 oder mit Polycarbonaten gemäß DE-A 2 114 611, Kombinationen von Polyurethanharzen mit Vinylchlorid-Vinylacetat-Copolymerisaten entsprechend DE-B 1 282 700 oder Kombination von Polyurethanelastomeren mit Copolymerisaten aus Vinylchlorid und Acrylsäureestern, wie z.B. in der DE-A 2 255 802 oder DE-A 2 234 822 beschrieben, weisen gute Pigmentdispergierfähigkeit auf und ergeben Schichten mit guter Packungsdichte.

Eine Magnetschicht, welche durch Dispergierung magnetischer Teilchen in einem Bindemittel zur Herstellung der überzugsmasse und durch Auftragen derselben auf einen Träger erhalten wurde, besitzt jedoch nur bei genügender Haftung gute mechanische Festigkeit. Deshalb kann eine Magnetschicht, welche keine ausreichende Haftung auf einem Träger aufweist, schon bei Anwendung einer geringen Kraft zerstört oder von der Trägerfolie gelöst werden. Es ist äußerst schwierig, eine Magnetschicht zu erhalten, welche selbst bei hoher Luftfeuchtigkeit und hoher Temperatur gut auf einem Träger haftet. Eine brauchbare aber aufwendige Lösung besteht darin, vor dem Auftragen der Magnetschicht eine Haftschicht auf den Träger aufzubringen. Die Zusammensetzung solcher Haftvermittlerschichten sind vielfach beschrieben. So wird z.B. die Verwendung von hochmolekularen Polyestern in US-A 4 183 976 beschrieben.

Das Aufbringen einer Haftschicht stellt jedoch einen zusätzlichen Aufwand hinsichtlich Material, Maschinen und Arbeit dar. Ein weiterer Nachteil ergibt sich daraus, daß sowohl durch den besonderen Arbeitsschritt als auch durch die Zwischenschicht selbst Fehlerquellen sich ergeben und damit gegebenenfalls die bei hochwertigen Aufzeichnungsträgern kritische Fehlerzahl ansteigt. Deshalb werden wirtschaftlich einfache Verfahren angestrebt mit denen sich fehlerfreie Magnetschichten ohne Haftvermittler und mit hervorragenden mechanischen Eigenschaften herstellen lassen, welche insbesondere unter schwierigen klimatischen Bedingungen noch gut haften.

Diese für eine erfolgreiche Nutzung der magnetischen Aufzeichnungsträger notwendigen Eigenschaften können nur durch Verwendung von Bindemittel-Kombinationen mit ausgezeichnetem mechanischen Verhalten erreicht werden. Wesentlich ist, daß die Bindemittel auch bei hohen Pigmentierungen noch starke Haftkräfte auf die Pigmentoberfläche und auf die Trägeroberfläche ausüben.

Hierfür wird verschiedentlich eine Abmischung von Polyurethanen mit Polyestern beschrieben (u.a. DE-B 1 269 661, JP-A 57 158021 und NL-A 66007214). Gemäß der JP-A 60 202528 wird die Verwendung eines Binders, bestehend aus einem niedermolekularen Polyisocyanat, einem Lactonpolyester (Molekulargewicht 600 - 20 000) mit 2 - 8 primären OH-Gruppen und einem Reaktionsinitiator vorgeschlagen.

In EP-A-0 281 873 ist ein magnetischer Aufzeichnungsträger beschrieben, bei da das Bindemittel zu mindestens 50 Gew.-% aus hochmolekularen verzweigten Polyurethanelastomeren mit OH-gruppenhaltigen Harnstoffgruppen an den Kettenenden besteht. Die dort beschriebenen Elastomere sind jedoch aufgrund ihrer unzureichenden mechanischen Eigenschaften, insbesondere ihres niedrigen E-Moduls, nicht für ale Einsatzmöglichkeiten geeignet.

Die beschriebenen Maßnahmen reichen jedoch nicht aus, alle genannten Anforderungen an das Bindemittelsystem gleichzeitig zu erfüllen. Zudem ist zum Erreichen einzelner Effekte oft eine Kombination der Polyurethane mit anderen Bindemitteln zwingend notwendig.

Es war somit Aufgabe der Erfindung, magnetischen Aufzeichnungsträger unter Verwendung von thermoplastischen und elastischen, in Ethern und/oder Ketonen gut löslichen Polyurethanen bereitzustellen, die eine große Oberflächenhärte aufweisen und einen hohen E-Modul besitzen, ohne daß dadurch die Zerreißfestigkeit und Dehnbarkeit beeinträchtigt wird. Zudem sollte eine gute Haftung der Schicht zum Trägermaterial vorhanden sein. Diese hohe mechanischen Belastbarkeit sollte auch noch bei höheren Temperaturen erhalten bleiben. Des weiteren war es eine Aufgabe der Erfindung, die entsprechenden Aufzeichnungsträger so zu gestalten, daß eine verbesserte Haftung und eine höhere Festigkeit der Magnetschicht auch in Gegenwart hoher Gleitmittelmengen gewährleistet wird.

Es wurde nun gefunden, daß magnetische Aufzeichnungsträger, bestehend aus einem nichtmagnetischen Trägermaterial und mindestens einer haftfest darauf aufgebrachten Magnetschicht auf der Basis eines in einem mindestens zu 50 Gew.% aus einem thermoplastischen Polyurethan bestehenden Bindemittel feinverteilten magnetischen Materials, die aufgabengemäßen Eigenschaften haben, wenn als thermoplastisches Polyurethan ein in Tetrahydrofuran lösliches, isocyanatgruppenfreies, verzweigtes Polyurethan mit gegebenenfalls OH-gruppenhaltigen Harnstoffgruppen an den Kettenenden und einem Molekulargewicht zwischen 40 000 und 200 000 eingesetzt wird, welches aus
A. 1 Mol eines Gemisches aus
   A1) einem Polydiol mit einem Molekulargewicht zwischen 400 und 4 000 und
   A2) einem Polydiol mit einem Molekulargewicht von größer 14 000,
   wobei das Molverhältnis der Komponente A1 zu der Komponente A2 größer/gleich 10 ist,
B. 0.3 bis 10 Mol eines Gemisches aus
   B1) einem aromatischen Diol und
   B2) einem geradkettigen Diol mit 2 bis 10 Kohlenstoffatomen
C. 0,05 bis 0,5 Mol eines Tri- oder Polyols mit 3 bis 10 Kohlenstoffatomen,
D. 1,3 bis 13 Mol eines Diisocyanats mit 6 bis 30 Kohlenstoffatomen und
E. 0,09 bis 2 Mol eines Aminoalkohols mit 2 bis 16 Kohlenstoffatomen und/oder eines OH-gruppenfreies Monoamins mit 2 bis 16 Kohlenstoffatomen
in Lösung hergestellt wird, mit der Maßgabe, daß das Verhältnis der OH-Gruppen der Komponenten A bis C zu den NCO-Gruppen der Komponente D zu den Amingruppen der Komponente E wie 1:1,03 bis 1,3:0,03 bis 0,3 beträgt.

Das in den erfindungsgemäßen Aufzeichnungsträgern eingesetzte verzweigte Polyurethan weist demnach zwischen 4 und 30, insbesondere zwischen 6 und 24 und bevorzugt zwischen 8 und 24 OH-Gruppen pro Molekül auf, die über Harnstoffgruppen mit den Kettenenden verknüpft sind. Dabei ist zur Erzielung der erforderlichen mechanischen Eigenschaften mindestens ein Molekulargewicht von 40 000 und höchstens von 200 000 erforderlich. Bevorzugt eignen sich Molekulargewichte von 50 000 bis 150 000 und insbesondere ein Molekulargewicht von 60 000 bis 110 000. Eine OH-Zahl von größer 30 ist bei hohen Molekulargewichten jedoch von Nachteil, da bei zu hohen OH-Zahlen die Moleküle zu stark verzweigt sind, wodurch die Herstellung und Verwendung erschwert wird, denn eine zu hohe Verzweigung führt zu Molekülknäueln und zu anvernetzten Polymeren. 1 bis 15, insbesondere 2 bis 10 Verzweigungen mit einer rechnerisch mittleren Kettenlänge von über 10 000 führen zu den angestrebten Polyurethanelastomeren.

Die derart aufgebauten Polyurethane haben im allgemeinen im unvernetzten Zustand eine Härte nach DIN 53 157 von größer 50 s. Sie haben ferner einen E-Modul (Elastizitätsmodul gemäß DIN 53 457) von größer 500 N/mm², eine Reißdehnung von größer 100 % (DIN 53455) und eine Reißfestigkeit von größer 30 N/mm² (DIN 53455). Der Erweichungspunkt liegt zwischen 80 und 180°C.

Polyurethan-Bindemittel mit einem hohen E-Modul sind im allgemeinen nicht nur hart und spröde, sondern besitzen auch nur geringe Haftung zu Polyesterträgerfolien. Die in den erfindungsgemäßen Aufzeichnungsträgern enthaltenen Bindemittel zeigen jedoch eine wesentliche Verbesserung der Haftung sowohl auf flexiblen Polymer-Substraten als auch auf Metalloberflächen. Das hohe mechanische Eigenschaftsniveau bleibt auch bei erhöhten Temperaturen erhalten. Überraschenderweise wird selbst bei Klimalagerung die Haftfestigkeit nicht negativ beeinflußt. Zudem wird auch die Dispergierbarkeit der magnetischen Materialien verbessert.

Zu einer weiteren Ausgestaltung der erfindungsgemäßen Aufzeichnungsträger wird der Dispersion, im wesentlichen bestehend aus dem magnetischen Material und dem speziellen Polyurethan, noch vor dem Auftragen auf das Trägermaterial ein Polyisocyanat zugesetzt. Für die Vernetzung kann eine Vielzahl organischer Di, Tri- oder Polyisocyanate oder Isocyanatprepolymerer bis zu einem Molgewicht von 10 000, vorzugsweise zwischen 500 und 3 000, verwendet werden. Bevorzugt sind Polyisocyanate bzw. Isocyanatprepolymere, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- und Triole oder durch Biuret- und Isocyanuratbildung entstehen, erwiesen. Besonders günstig ist ein Additionsprodukt von Toluylendiisocyanat an Trimethylolpropan und Diethylenglykol. Durch das Zumischen der vorgenannten Isocyanate, bevorzugt zur fertigen Magnetdispersion vor dem Auftragen auf den Träger, wird die Haftfestigkeit nach Klimalagerung nochmals sehr wesentlich verbessert, außerdem können daneben die mechanischen Eigenschaften der erfindungsgemäßen Aufzeichnungsträger bei Verringerung der Thermoplastizität der Magnetschicht in ihrer Abriebfestigkeit nochmals sehr wesentlich verbessert werden. Die Menge der dafür zugesetzten Polyisocyanate beträgt im allgemeinen etwa 1 bis 20 Gew.%, bevorzugt 4 bis 15 %, bezogen auf die Gesamtmenge des Bindemittels.

Das die erfindungsgemäßen Aufzeichnungsträger charakterisierende Polyurethan wird aus an sich bekannten Komponenten aufgebaut.

Als Komponente A1 (Polydiol) wird ein Polyesterol, Polyetherol oder Polycarbonat mit einem Molekulargewicht von 400 bis 4 000, bevorzugt von 700 bis 2 500, eingesetzt. Die Polydiole sind zweckmäßigerweise überwiegend lineare Polymere mit zwei endständigen OH-Gruppen. Die Säurezahl der Polydiole ist kleiner als 10 und vorzugsweise kleiner als 3. Die Polyesterole lassen sich in einfacher Weise durch Veresterung von aliphatischen oder aromatischen Dicarbonsäuren mit 4 bis 15 C-Atomen, vorzugsweise 4 bis 8 C-Atomen, mit aliphatischen oder cycloaliphatischen Glykolen, bevorzugt mit 2 bis 20 C-Atomen oder duch Polymerisation von Lacton mit 3 bis 10 C-Atomen herstellen. Als Dicarbonsäuren lassen sich beispielsweise Glutarsäure, Pimelinsäure, Korksäure, Sebacinsäure, Dodecansäure, Terephthalsäure, Isophthalsäure und vorzugsweise Adipinsäure, Bernsteinsäure und Terphthalsäure einsetzen. Die Dicarbonsäuren können einzeln oder als Gemische verwendet werden. Zur Herstellung der Polyesterole kann es gegebenenfalls vorteilhaft sein, anstelle der Dicarbonsäuren die entsprechenden Säurederivate, wie Carbon-säureanhydride oder Carbonsäurechloride zu verwenden. Beispiele für geeignete Glykole sind Diethylenglykol, Pentandiol, Decandiol-1, 10 und 2, 2, 4-Trimethylpentandiol-1,5. Vorzugsweise verwendet werden Ethandiol-1,2, Butandiol-1,4, Hexandiol-1,6 und 2,2-Dimethylpropandiol-1,3, 1,4-Dimethylolcyclohexan, 1,4-Diethanolcyclohexan, 1,4-Diethanolpropan. Als Lactone für die Herstellung der Polyesterole eignen sich z.B. α,α-Dimethyl-β-propiolacton, Butyrolacton und vorzugsweise Caprolacton. Polyetherole sind beispielsweise Polytetrahydrofuran oder Poly-propylenoxiddiol. Die Polycarbonate sind im allgemeinen auf Hexandiol-1,6-Basis aufgebaut.

Als Komponente A2 (Polydiol) wird ein Polyester mit einem Molekulargewicht ≧ 14 000 (M_{w}) eingesetzt. Bei den Produkten handelt es sich um lösliche, lineare, thermoplastische Copolyester mit zwei endständigen OH-Gruppen.

Die Produkte enthalten aromatische Bestandteile. Entsprechende kommerzielle Produkte sind z.B. die ®Dynapol L-Typen der Fa. Dynamit Nobel oder das ®PE 49 000 der Fa. DuPont.

Als Komponente B1 werden aromatische Diole, Vorzugsweise Bisphenol A bzw. dessen Derivate eingesetzt. Entsprechende Produkte sind z.B. unter dem Namen Dianol® 22 oder Dianol® 33 von der Fa. Akzo erhältlich.

Insbesondere werden als Komponente B1) Verbindungen der Formel (I) 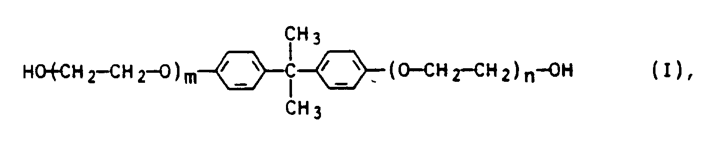
eingesetzt, webei die werte m und n unabhängig voneinander die Werte 0, 1 oder 2 aufweisen können.

Die die Komponente B2 bildenden geradkettige aliphatische Diole mit 2 bis 10 C-Atome, vorzugsweise 4 bis 6 C-Atome, eingesetzt, so z.B. Ethandiol-1,2, Propandiol-1,3, Butandiol-1,4, Hexandiol-1,6, Pentandiol-1,5, Decandiol-1, 10, 2-Methyl-1,3-Propandiol, 2-Methyl-2-butyl-1,3-propandiol, 2,2-Dimethyl-1,4-butandiol, 2-Methyl-2-butyl-1,3-propandiol, Hydroxypicalinsäureneopentylglylkolester, Diethylenglykol, Triethylenglykol und Methyldiethanolamin, 1,4-Dimethylolcyclohexan, 1,4-Diethanolcyclohexan.

Als Triole für die Komponente C werden Verbindungen mit 3 bis 10, vorzugsweise 3 bis 6 C-Atomen eingesetzt. Beispiele für entsprechende Triole sind Glycerin oder Trimethylolpropan. Geeignet sind auch niedermolekulare Umsetzungsprodukte von z.B. Trimethylolpropan mit Ethylenoxid und/oder Propylenoxid. Das Vorhandensein von Triolen bei der Polyaddition führt zu einer Verzweigung des Endprodukts, was sich, sofern keine örtliche Vernetzung auftritt, positiv auf die mechanischen Eigenschaften des Polyurethans auswirkt. Als Polyole lassen sich beispielsweise Erythrit, Pentaerythrit und Sorbit einsetzen.

Zur Bildung der NCO-gruppenhaltigen Zwischenprodukte werden die unter A, B und C genannten Komponenten mit aliphatischen, cycloaliphatischen oder aromatischen Diisocyanaten mit 6 bis 30 C-Atomen (Komponente D) umgesetzt. Zu diesem Zweck eignen sich Verbindungen wie z.B. Toluylen-2,4-diisocyanat, Toluylen-2,6-diisocyanat, m-Phenylendiisocyanat, 4-Chlor-1,3-phenylendiisocyanat, 1,5-Naphthylendiisocyanat; 1,6-Hexamethylendiisocyanat, 1,4-Cyclohexylendiisocyanat und 1,5-Tetrahydronaphthylendiisocyanat, Diphenylmethandiisocyanat, Dicyclohexylmethandiisocyanat, Isophorondiisocyanat oder Gemische davon.

Danach werden die NCO-gruppenhaltige Zwischenprodukte aus A bis D mit der Komponente E umgesetzt. Für die OH-gruppenhaltigen Polyurethanharnstoffelastomere sind dies Aminoalkohle mit 2 bis 16, vorzugsweise 3 bis 6 C-Atomen, u.a. Monoethanolamin, Methylisopropanolamin, Ethylisopropanolamin, Methylethanolamin, 3-Aminopropanol, 1-Ethylaminobutanol-2, 4-Methyl-4-aminopentanol-2, N-(2-Hydroxyethyl)anilin. Diolamine sind besonders geeignet, da durch ihre Anlagerung am Kettenende die OH-Zahl der Polymeren verdoppelt wird. Als besonders günstig haben sich Diethanolamin und Diisopropanolamin erwiesen. Für die OH-gruppenfreien Polyurethanharnstoffelastomere werden als Komponente E Monoamine, wie z.B. Dimethylamin, Ethylpropylamin oder Dibutylamin herangezogen.

Besonders vorteilhaft sind solche Polyurethanharnstoffelastomere, bei denen die OH-Endgruppen zu mehr als 80 % aus einer
-NH-CO-NR²-R¹-OH oder 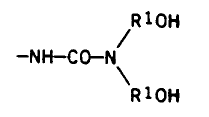
-Gruppe bestehen,
wobei
R¹ = -(CH₂)ₙ-,
R² = H, -CH₃, -(CH₂)ₙ-CH₃ und
n = 1 bis 10
bedeuten.

Das Verhältnis der Komponente A bis D kann von 1,35 bis 13 Mol Diisocyanat je Mol Polydiol bei Verwendung von 0,3 bis 10 Mol des Diols mit 2 bis 20 C-Atomen und 0,05 bis 0,5 Mol Triol variiert werden, wobei die Menge des verwendeten Diols teilweise von dem Molekulargewicht des verwendeten Polydiols abhängt. Aus praktischen Gründen ist es jedoch zweckmäßig, einen Diisocyanatüberschuß von mindestens 3 % über der zur vollständigen Umsetzung der Reaktionsteilnehmer erforderlichen Mengen zu verwenden, so daß das Verhältnis der Zahl der eingesetzten Isocyanatgruppen zur Zahl der Hydroxylgruppen in der Reaktionsmischung 1,03 bis 1,3, vorzugsweise 1,05 bis 1,15 beträgt. Der NCO-Überschuß wird dann stöchiometrisch mit den NH-Gruppen des Aminoalkohls umgesetzt, so daß das Verhältnis der Komponenten (A bis C):D:E 1:1,03 bis 1,3:0,03 bis 0,3, bevorzugt 1:1,05 bis 1,15:0,05 bis 0,15 beträgt.

Die so aufgebauten thermoplastischen, elastischen OH-gruppen-haltigen oder OH-gruppenfreien Polyurethane werden in Lösung nach dem 2-Stufenverfahren, gegebenenfalls in Gegenwart der Katalysatoren und anderen Hilfsmitteln und/oder Zusatzstoffen hergestellt. Diese Produkte nach dem lösungsmittelfreien Batch-Verfahren herzustellen, ist nicht möglich. Da sich aufgrund der Anwesenheit des Triols und der Reaktion von Amin mit NCO-Gruppen bei der Substanzpolyaddition zumindest teilweise Gel-Teilchen bilden, wird die Lösung gearbeitet. Allgemein wird bei der Lösungspolyaddition die Gefahr einer örtlichen Übervernetzung, wie sie bei der Substanzpolyaddition auftritt, vermieden.

Beim 2-Stufenverfahren sind je nach Reaktionsbedingungen (Lösungsmittelmenge, Reaktionswärme) zwei unterschiedliche Fahrweisen möglich.
Fahrweise 1: Das Diisocyanat wird mit etwas Lösungsmittel vorgelegt, dann werden die Bausteine A, B, C und gegebenenfalls der Katalysator und die Hilfs- und Zusatzstoffe in Lösungsmittel bei Temperaturen von 20 bis 90°C, vorzugsweise 30 bis 70°C, in 0,2 bis 5 Stunden zugegeben. Die Komponenten werden bis zum gewünschten NCO-Gehalt umgesetzt, dann wird in der 2. Stufe der Baustein E zugesetzt.
Fahrweise 2: Bei diesem Verfahren werden alle Ausgangskomponenten A bis D in einem Teil des Lösungsmittels gelöst, so daß die Lö-sungen mit einem Feststoffgehalt von 15 bis 50 Gew.% gebildet werden. Anschließend werden die Lösungen unter Rühren auf Temperaturen von 20 bis 90°C, vorzugsweise von 30 bis 70°C, gegebenenfalls nach der Katalysatorzugabe, erwärmt. Dann werden die Komponenten bis zum gewünschten NCO-Gehalt umgesetzt danach wird in der 2. Stufe der Baustein E zugegeben.

Beim 2-Stufenverfahren wird in der ersten Stufe mit einem NCO-Überschuß, gegenüber den Bausteinen A bis C gearbeitet. Bei beiden Fahrweisen ist es möglich, in einem Teil des Lösungsmittels die Reaktion zu beginnen und das restliche Lösungsmittel während oder nach der Reaktion zuzugeben.

Als Lösungsmittel für die Herstellung der Polyurethane werden vorzugsweise cyclische Ether, wie Tetrahydrofuran und Dioxan, und cyclische Ketone, wie Cyclohexanon, verwendet. Selbstverständlich können je nach Anwendungsgebiet die Polyurethane auch in anderen stark polaren Lösungsmitteln, wie Dimethylformamid, N-Methylpyrroldidon, Dimethylsulfoxid oder Ethylglykolacetat gelöst werden. Ebenso ist es möglich, die genannten Lösungsmittel mit Aromaten, wie Toluol oder Xylol und Estern, wie Ethyl- oder Butylacetat, zu mischen.

Als geeignete Katalysatoren zur Herstellung der Polyurethane und für die Vernetzungsreaktion seien beispielhaft genannt: tert. Amine, wie Triethylamin, Triethylendiamin, N-Methyl-pyridin und N-Methyl-morpholin, Metallsalze, wie Zinnoctoat, Bleioctoat und Zinkstearat und organische Metallverbindungen, wie Dibutylzinndilaurat. Die geeignete Katalysatormenge ist abhängig von der Wirksamkeit des in Frage kommenden Katalysators. Im allgemeinen hat es sich als zweckmäßig erwiesen, 0,005 bis 0,3 Gewichtsteile für jeweils 100 Gewichtsteile, vorzugsweise 0,01 bis 0,1 Gewichtsteile für jeweils 100 Gewichtsteile Polyurethan zu verwenden.

Die die erfindungsgemäßen Aufzeichnungsträger kennzeichnenden Polyurethane lassen sich als alleinige Bindemittel für die Herstellung von Magnetschichten verwenden. Es kann jedoch für spezielle Anwendungszwecke bei magnetischen Aufzeichnungsträgern zweckmäßig sein, eine zweite Bindemittelkomponente in Mengen von 5 bis zu 50 Gewichtsteilen, vorzugsweise von 10 bis 40 Gewichtsteilen, bezogen auf die resultierende Gesamtbindemittelmenge, zuzusetzen. Die im Bindemittelgemisch mit den angegebenen speziellen Polyurethanen enthaltenen physikalisch trocknenden Bindemitteln sind bekannt. Es handelt sich hierbei z.B. um ein Polyvinylformal-Bindemittel, welches durch Hydrolyse eines Polymerisats eines Vinylesters und anschließende Umsetzung des Vinylalkohol-Polymeren mit Formaldehyd hergestellt wurde. Die Polyvinylformale haben zweckmäßigerweise einen Vinylformalgruppengehalt von mindestens 65 Gew.% und insbesondere mindestens 80 Gew.%. Geeignete Polyvinylformale haben eine Gehalt an Vinylalkohol-Gruppen von 5 bis 13 Gew.%, einen Gehalt an Vinylformal-Gruppen von 80 bis 88 Gew.%, ein spezifisches Gewicht von ca. 1,2 und eine Viskosität von 50 bis 120 mPas, gemessen bei 20°C mit einer Lösung von 5 g Poly-vinylformal in 100 ml Phenol-Toluol (1:1) mit einem K-Wert nach Fikentscher von 40 bis 70 (1 %ig in DMF). In gleicher Weise geeignet sind neben dem Polyvinylformal Vinylchlorid-diolmono- oder -di(meth)acrylat-Copolymerisate, die sich z.B. in an sich bekannter durch Lösungscopolymerisation oder Suspensionscopolymerisation von Vinylchlorid und dem Diol-monomethacrylat oder -monoacrylat herstellen lassen. Das hierfür zum Einsatz gelangende Diolmono- oder -di-acrylat oder -methacrylat ist ein Veresterungsprodukt von Acrylsäure oder Methycrylsäure mit der entsprechenden molaren Menge an aliphatischem Diol mit 2 bis 4 C-Atomen, wie Ethlyenglycol, 1,4-Butandiol und bevorzugt Propandiol, wobei das Propandiol vorzugsweise aus 1,3-Propandiol und 0 bis 50 Gew.% 1,2-Propandiol besteht. Die Copolymerisate haben zweckmäßigerweise einen Vinylchloridgehalt von 50 bis 95 Gew.% und einen Diolacrylat- oder -methacrylat-Gehalt von 5 bis 50 Gew.%. Besonders geeignete Copolymerisate besitzen vorzugsweise einen Gehalt von 70 bis 90 Gew.%. Vinylchlorid und 10 bis 30 Gew.% Diolmonoacrylat bzw. Diolmonomethacrylat. Eine 15 %ige Lösung besonders geeigneter Copolymerisate wie der Vinylchlorid-Propandiolmonoacrylat-Copolymerisate in einem Gemisch aus gleichen Volumenteilen von Tetrahydrofuran und Dioxan weist bei 25°C eine Viskosität von etwa 30 mPas auf. Der K-Wert nach H. Fikentscher (Cellulosechemie 13 (1932), S. 58 ff.) der besonders geeigneten Produkte liegt zwischen 30 und 50, vorzugsweise bei etwa 40 (1 % in DMF). Außerdem lassen sich auch Phenoxyharze einsetzen, deren Konstitution der Formel 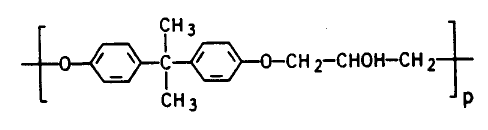
mit p annähernd gleich 100 entspricht. Es handelt sich hierbei um Polymere wie sie z.B. in der DE-B 1 295 011 beschrieben sind. In gleicher Weise eignen sich Celluloseester-Bindemittel in dem bezeichneten Bindemittelgemisch. Dies sind Veresterungsprodukte der Cellulose mit Carbonsäuren mit 1 bis 4 Kohlenstoffatomen, wie z.B. Celluloseacetat, Cellulosetriacetat, Celluloseacetopropionat, Celluloseacetobutyrat.

Die Verarbeitung der speziellen verzweigten Polyurethane ggf. in Abmischung mit anderen Bindemitteln zusammen mit dem magnetischen Material und den üblichen Hilfsstoffen zu den erfindungsgemäßen Aufzeichnungsträgern erfolgt in der an sich bekannten Weise.

Als anisotrope magnetische Materialien können die an sich bekann-ten Pigmente verwendet werden, die die Eigenschaften der re-sultierenden Magnetschichten wesentlich beeinflussen, wie z.B. Gamma-Eisen(III)-oxid, feinteiliger Magnetit, ferromagnetisches undotiertes oder dotiertes Chromdioxid oder kobaltmodifiziertes Gamma-Eisen(III)-oxid sowie Ferrote und Metallpigmente. Bevorzugt sind nadelförmiges Gamma-Eisen(III)-oxid, Co-dotiertes Eisen-(III)oxid, sowie ferromagnetisches Chromdioxid. Die Teilchengröße beträgt im allgemeinen 0,15 bis 2 µm, bevorzugt ist der Bereich von 0,15 bis 0,8 µm.

Ferner enthalten die Magnetschichten in kleinen Mengen Zusätze wie Dispergiermittel und/oder Gleitmittel, aber auch Füllstoffe, die bei der Dispergierung der magnetischen Materialien oder bei der Herstellung der Magnetschicht zugemischt werden. Beispiele solcher Zusätze sind Fettsäuren oder isomerisierte Fettsäuren, wie Stearinsäure oder deren Salze mit Metallen der ersten bis vierten Hauptgruppe des Periodensystems der Elemente, amphotere Elektrolyte, wie Lecithin sowie Fettsäureester oder Wachse, Siliconöle, Ruß usw. Die Menge der Zusätze ist die an sich übliche, sie liegt im allgemeinen unter 10 Gew.%, bezogen auf die Magnetschicht.

Das Mengenverhältnis von magnetischem Material zu Bindemittel in den erfindungsgemäßen Aufzeichnungsmaterialien liegt zwischen 1 bis 10 und ist insbesondere 3 bis 6 Gewichtsteilen magnetisches Material auf ein Gewichtsteil des Bindemittelgemisches. Es ist ein besonderer Vorteil, daß aufgrund des vorzüglichen Pigmentbindevermögens der speziellen Polyurethane hohe Magnetmaterialkonzentrationen in den Magnetschichten möglich sind, ohne daß die mechanisch-elastischen Eigenschaften verschlechtert oder die Anwendungseigenschaften merklich in Mitleidenschaft gezogen werden.

Als nichtmagnetische und nichtmagnetisierbare Träger lassen sich die üblichen starren oder flexiblen Trägermaterialien verwenden, insbesondere Folien aus linearen Polyestern, wie Polyethylenterephthalat, im allgemeinen in Stärken von 4 bis 200 µm und ins-besondere von 6 bis 36 µm. In neuerer Zeit ist auch die Anwendung der Magnetschichten auf Papierträgern für Zwecke der mittleren Datentechnik bedeutend geworden; auch hierfür lassen sich die erfindungsgemäßen Beschichtungsmassen vorteilhaft verwenden.

Die Herstellung der erfindungsgemäßen magnetischen Aufzeichnungsträger kann in bekannter Weise erfolgen. Zweckmäßig wird die in einer Dispergiermaschine, z.B. einer Topfkugelmühle oder einer Rührwerksmühle, aus dem magnetischen Material und einer Lösung der Bindemittel unter Zusatz von Dispergiermitteln und anderen Zusätzen hergestellte Magnetpigmentdispersion gegebenenfalls nach dem Zumischen des Polyisocyanatvernetzers filtriert und mit der üblichen Beschichtungsmaschine, z.B. mittels eines Linealgießers, auf den nichtmagnetischen Träger aufgetragen. In der Regel erfolgt eine magnetische Ausrichtung, bevor die flüssige Beschichtungsmischung auf dem Träger getrocknet wird; letzteres geschieht zweckmäßigerweise in 10 bis 200 Sekunden bei Temperaturen von 50 bis 90°C. Die Magnetschichten können auf üblichen Maschinen mittels Hindurchführen zwischen geheizten und polierten Walzen, gegebenenfalls bei Anwendung von Druck und Temperaturen von 25 bis 100°C, vorzugsweise 60 bis 80°C, geglättet und verdichtet werden.

Dabei hat es sich bei der ggf. zusätzlich durchgeführten Vernetzung der Bindemitteln sehr vorteilhaft erwiesen, die Kalandrierung vorzunehmen bevor die Vernetzung abgeschlossen ist, da die OH-haltigen Polymeren in unvernetzten Zustand sehr gut verdichtet werden können, ohne hierbei zu verkleben. Die Dicke der Magnetschicht beträgt im allgemeinen 0,5 bis 20 µm, vorzugsweisen 1 bis 10 µm. Im Falle der Herstellung von Magnetbändern werden die beschichteten Folien in der Längsrichtung in den üblichen, meist nach Zoll festgelegten Breiten geschnitten.

Die erfindungsgemäßen magnetischen Aufzeichnungsträger weisen gegenüber solchen, welche mit den dem Stand der Technik entsprechenden Polyurethanen bzw. Polyurethanmischungen mit geeigneten härteren Lackharzkomponenten als Bindemittel hergestellt sind, verbesserte Haft- bzw. Schälfestigkeit auf. Außerdem ist wesentlich, daß sich in dem erfindungsgemäßen Polyurethan die bekannten magnetischen Materialien in üblichen Dispergiereinrichtungen leicht und vor allem mit sehr geringem Zeit- und Energieaufwand zu homogenen hochpigmentierten Dispersionen verarbeiten lassen. Zusätzlich können mit Hilfe des mit Polyisocyanat vernetzten OH-gruppenhaltigen Polyurethanbindemittels in vereinfachter und verkürzter Arbeitsweise verbesserte magnetische Aufzeichnungsträger erhalten werden. Ein weiterer Vorteil ist dabei, daß die für die erfindungsgemäßen magnetischen Aufzeichungsträger geeigneten Polymeren Magnetschichten ergeben, welche auch bei erhöhter Temperatur und Luftfeuchtigkeit beständig sind.

Die in den nachstehenden Beispielen und Vergleichsversuchen genannten Teile und Prozente beziehen sich, soweit nicht anders angegeben, auf das Gewicht. Volumenteilen verhalten sich zu Gewichtsteilen wie Liter zu Kilogramm.

### Beispiel 1

a) Herstellung Polymer A:
   In einem beheizbaren Reaktionsgefäß von 150 000 Volumenteilchen Inhalt ausgerüstet mit Rührer und Rückflußkühler, werden 7143 Teile eines Polycarbonatdiols (Molekulargewicht 2000), 4821 Teile eines linearen Copolyesters (Molekulargewicht 18 000 - 20 000), 632 Teile 1,6-Hexandiol, 2737 Teile ethoxyliertes 2,2-Bis(4-hydroxyphenyl)-propan und 80 Teile Trimethylolpropan zusammen mit 3672 Teilen 4,4'-Diphenylmethandiisocyanat und 935 Teilen Toluylendiisocyanat in 60 061 Teilen Tetrahydrofuran gelöst und auf 55°C erwärmt. Die Komponenten werden bis zu einer Endviskosität von 7 Pas (bei 60°C) umgesetzt. Der NCO-Gehalt beträgt 0,08 %. Anschließend wird mit 42 431 Teilen Tetrahydrofuran auf einen Feststoffgehalt von 16,5 % verdünnt. Gleichzeitig wird die Reaktion durch Zugabe von 233 Teilen Diethanolamin abgestoppt. Der K-Wert des gebildeten Polymeren beträgt 63,9 gemessen als 1 %ige Lösung in Dimethylformamid.
b) Herstellung Dispersion A:
   In eine Stahlkugelmühle von 6 l Rauminhalt, gefüllt mit 8 kg Stahlkugeln eines Durchmessers von 4 - 6 mm, wurden 810 g eines Co-dotierten Eisenoxids mit einer mittleren Teilchengröße von 0,23 µm und einem Verhältnis von Länge zu Dicke von 4:1 bis 7:1 und von einer Koerzitivfeldstärke von 52 kAm⁻¹ und spezifischer Oberfläche von 42 m²g⁻¹ und 90 g eines ferromagnetischen Chromdioxidpigments mit einer mittleren Teilchengröße von 0,24 µm und einem Verhältnis von Länge zu Dicke von 5:1 bis 8:1 und einer Koerzitivfeldstärke von 48 kAm⁻¹ und spezifischer Oberfläche von 30 m²g⁻¹ zusammen mit 8 kg Ruß einer spezifischen Oberfläche von > 150 m²g⁻¹, 45 g eines Chrom(III)-oxids als Stützpigment, 850 g einer 16,5 %igen Lösung des Polymeren A, 90 g einer 25 %igen Lösung eines Vinylchlorid/Vinylacetat-/Vinylalkohol-Copolymeren (VAGH® der Fa. Union Carbide) in Tetrahydrofuran/Dioxan 1:1, 22 g Lecithin als Dispergierhilfsmittel, 11 g Stearinsäure, 11 g Stearinsäuremethylester als Gleitmittel und 1378 g eines Gemisches von gleichen Teilen Tetrahydofuran und Dioxan, eingefüllt und 120 Stunden dispergiert.
   Die Magnetdispersion wurde dann unter Druck durch einen Filter von 5 µm Porenweite filtriert und unmittelbar vor dem nachfolgenden Auftragen auf eine 15 µm starke Polyethylenterephthalatfolie unter Rühren mit 31,5 g einer 50 %igen Lösung von Triisocyanat aus 3 Mol Toluylendiisocyanat und 1 Mol Trimethylolpropan versehen. Die beschichtete Folie wurde nach Durchlaufen eines Magnetfeldes zur Ausrichtung der Magnetteilchen bei Temperaturen zwischen 60°C und 90°C getrocknet. Durch Hindurchführen zwischen beheizten Walzen (60°C, Liniendruck 200 kg/cm) wurde die Magnetschicht verdichtet. Die Dicke der Magnetschicht beträgt 4 µm. Die beschichtete Folie wurde anschließend in Video-Bänder von 1/2 Zoll Breite geschnitten.

### Beispiel 2

a) Herstellung Polymer B
   Die Zusammensetzung und Herstellung erfolgt wie in Beispiel 1 mit der Ausnahme, daß anstelle des Abstoppmittels Diethanolamin die entsprechende molare Menge Dibutylamin eingesetzt wurde.
b) Herstellung Dispersion B
   Verfahren erfolgt wie in Beispiele 1b mit der Ausnahme, daß als Polyurethanelastomer das Polymer B eingesetzt wird und das Vinylacetat/Vinylakohol-Copolymer (VAGH) ebenfalls durch das Polymer B und das Chom(III)oxid durch 52 g Al₂O₃ ersetzt wird. Anstelle der 31,5 g der 50 %igen Lösung des Triisocyanats werden 25 g derselben zugesetzt.

### Vergleichsversuch 1

a) Herstellung Polymer C
   In einem beheizbaren Reaktionsgefäß von 150 000 Volumenteilen Inhalt ausgerüstet mit Rührer und Rückflußkühler, werden 10 237 Teile eines Polyesterdiols aus Adipinsäure und 1,4-Butandiol (Molekulargewicht 1000), 1207 Teile 1,4-Butandiol, und 65 Teile Trimethylolpropan zusammen mit 6277 Teilen 4,4'-Diphenyl-methandiisocyanat in 53 358 Teilen Tetrahydrofuran gelöst und auf 55°C erwärmt. Die Komponenten werden bis zu einer Endviskosität von 2 Pas (bei 60°C) umgesetzt. Der NCO-Gehalt beträgt 0,06 %. Anschließend wird mit 71 144 Teilen Tetrahydrofuran auf einen Feststoffgehalt von 12,5 % verdünnt. Gleichzeitig wird die Reaktion durch Zugabe von 190 Teilen Diethanolamin abgestoppt. Der K-Wert des gebildeten Polymeren beträgt 63,0 gemessen als 1 %ige Lösung in Dimethylformamid.
b) Herstellung Dispersion C
   Verfahren erfolgt wie in Beispiel 1b mit der Ausnahme, daß als Polyurethanelastomer das Polymer C eingesetzt wurde. Dabei wurden 1130 g eines Gemisches aus gleichen Teilen Tetrahydrofuran/Dioxan eingesetzt.

### Vergleichsversuch 2

### Herstellung Dispersion D

Verfahren wird wie in Beispiel 1b durchgeführt, nur wurde hier das Polyurethanelastomer durch ein nach dem Schmelzkondensationsverfahren gemäß DE-AS 12 95 011 hergestelltes Polyurethan ersetzt. So wurden 1130 g einer 12,5 %igen Lösung dieses Polymeren und 1100 g eines Gemisches aus gleichen Teilen Tetrahydrofuran/Dioxan eingesetzt.

### Vergleichsversuch 3

a) Herstellung Polymer E
   In einem beheizbaren Reaktionsgefäß von 150 000 Volumenteilen Inhalt ausgerüstet mit Rührer und Rückflußkühler, werden 10 714 Teile eines Polycarbonatdiols (Molekulargewicht 2000), 948 Teile 1,6-Hexandiol, 4232 Teile ethoxyliertes 2,2-Bis(4-hydroxyphenyl)-propan und 120 Teile Trimethylolpropan zusammen mit 5640 Teilen 4,4'-Diphenylmethandiisocyanat und 1262 Teilen Toluylendiisocyanat in 53 472 Teilen Tetrahydrofuran gelöst und auf 55°C erwärmt. Die Komponenten werden bis zu einer Endviskosität von 20 Pas (bei 60°C) umgesetzt. Der NCO-Gehalt beträgt 0,04 %. Anschließend wird mit 39 230 Teilen Tetrahydrofuran auf einen Feststoffgehalt von 20,0 % verdünnt. Gleichzeitig wird die Reaktion durch Zugabe von 259 Teilen Diethanolamin abgestoppt. Der K-Wert des gebildeten Polymeren beträgt 63,0 gemessen als 1 %ige Lösung in Dimehylformamid.
b) Herstellung Dispersion E
   In einer Stahlkugelmühle mit einem Füllvolumen von 100 000 Volumenteilen, die mit etwa 40 Umdrehungen pro Minute betrieben wird, werden 100 000 Teile Stahlkugeln, 16 000 Teile der auf 12,5 % verdünnten Lösung des Polymeren E, 10 000 Teile einer 10 %igen Lösung eines Polyvinylformals, bestehend aus 82 % Vinylformal-, 12 % Vinylacetat- und 6 % Vinylalkoholeinheiten mit einem K-Wert von 50 (1 %ig in DMF), 67,5 Teile N-Talgfett-1,3-Diaminodioleat, 270 Teile Zinkstearat und 13 500 Teile eines ferromagnetischen Chromdioxidpigments mit einer mittleren Teilchengröße von 0,5 µm und einem Verhältnis von Länge zu Dicke von 4:1 bis 9:1 und 4 500 Teile Tetrahydrofuran eingefüllt und 120 Std. dispergiert. Die Magnetdispersion wird sodann unter Druck durch ein Filter von 5 µm Porenweite filtriert. Mit einem Linealgießer wird nach der üblichen Technik eine 20 µm starke Polyethylenterephthalatfolie mit der Magnetdispersion beschichtet und nach Durchlaufen eines Magnetfeldes die Beschichtung bei Temperaturen zwischen 60 und 100°C getrocknet. Durch Hindurchführen zwischen beheizten Walzen (70°C) unter Druck wird die Magnetschicht verdichtet und geglättet. Die resultierende Dicke beträgt 5 µm. Die beschichtete Folie wird anschließend in Audio-Bänder von 3,81 mm Breite geschnitten.

### Vergleichsversuch 4

### Herstellung Polymer F

In einem beheizbaren Reaktionsgefäß von 150 000 Volumenteilen Inhalt ausgerüstet mit Rührer und Rückflußkühler, werden 6726 Teile eines Polycarbonatdiols (Molekulargewicht 2000), 4445 Teile eines linearen Copolyesters aus einem Gemisch aus Isophthalsäure/Terephthalsäure und Diethylenglykol (Molekulargewicht 3300), 595 Teile 1,6-Hexandiol, 2577 Teile ethoxyliertes 2,2-Bis(4-hydroxyphenyl)-propan und 75 Teile Trimethylolpropan zusammen mit 3772 Teilen 4,4'-Diphenyl-methandiisocyanat und 866 Teilen Toluylendiisocyanat in 57 170 Teilen Tetrahydrofuran gelöst und auf 55°C erwärmt. Die Komponenten werden bis zu einer Endviskosität von 6 Pas (bei 60°C) umgesetzt. Der NCO-Gehalt beträgt 0,06 %. Anschließend wird mit 40 377 Teilen Tetrahydrofuran auf einen Feststoffgehalt von 16,5 % verdünnt. Gleichzeitig wird die Reaktion durch Zugabe von 219 Teilen Diethanolamin abgestoppt. Der K-Wert des gebildeten Polymeren beträgt 60,7 gemessen als 1 %ige Lösung in Dimethylformamid.

### Vergleichsversuch 5

### Herstellung Polymer G

In einem beheizbaren Reaktionsgefäß von 150 000 Volumenteilen Inhalt ausgerüstet mit Rührer und Rückflußkühler, werden 6849 Teile eines Polycarbonatdiols (Molekulargewicht 2000), 4479 Teile eines linearen Copolyesters aus einem Gemisch aus Isophthalsäure/Terephthalsäure und Diethylenglykol (Molekulargewicht 4360) 606 Teile 1,6-Hexandiol, 2624 Teile ethoxyliertes 2,2-Bis(4-hydroxyphenyl)-propan und 77 Teile Trimethylolpropan zusammen mit 3772 Teilen 4,4'-Diphenyl-methandiisocyanat und 866 Teilen Toluylendiisocyanat in 57 820 Teilen Tetrahydrofuran gelost und auf ca. 55°C erwärmt. Die Komponenten werden bis zu einer Endviskosität von 6 Pas (bei 60°C) umgesetzt. Der NCO-Gehalt beträgt 0,06 %. Anschließend wird mit 40 844 Teilen Tetrahydrofuran auf einen Feststoffgehalt von 16,5 % verdünnt. Gleichzeitig wird die Reaktion durch Zugabe von 223 Teilen Diethanolamin abgestoppt. Der K-Wert des gebildeten Polymeren beträgt 59,6 gemessen als 1 %ige Lösung in Dimethylformamid.

### Vergleichsversuch 6

### Herstellung Polymer H

In einem beheizbaren Reaktionsgefäß von 150 000 Volumenteilen Inhalt ausgerüstet mit Rührer und Rückflußkühler, werden 6351 Teile eines Polycarbonatdiols (Molekulargewicht 2000), 4288 Teile eines linearen Copolyesters aus Terephthalsäure und ethoxylierten 2,2-Bis(4-hydroxyphenyl)-propan (Molekulargewicht 1850), 562 Teile 1,6-Hexandiol, 2433 Teile ethoxyliertes 2,2-Bis(4-hydroxyphenyl)-propan und 71 Teile Trimethylolpropan zusammen mit 3772 Teilen 4,4'-Diphenyl-methandiisocyanat und 866 Teilen Toluylendiisocyanat in 55 028 Teilen Tetrahydrofuran gelöst und auf 55°C erwärmt. Die Komponenten werden bis zu einer Endviskosität von 7 Pas (bei 60°C) umgesetzt. Der NCO-Gehalt beträgt 0,05 %. Anschließend wird mit 38 844 Teilen Tetrahydrofuran auf einen Feststoffgehalt von 16,5 % verdünnt. Gleichzeitig wird die Reaktion durch Zugabe von 207 Teilen Diethanolamin abgestoppt. Der K-Wert des gebildeten Polymeren beträgt 61,7 gemessen als 1 %ige Lösung in Dimethylformamid.

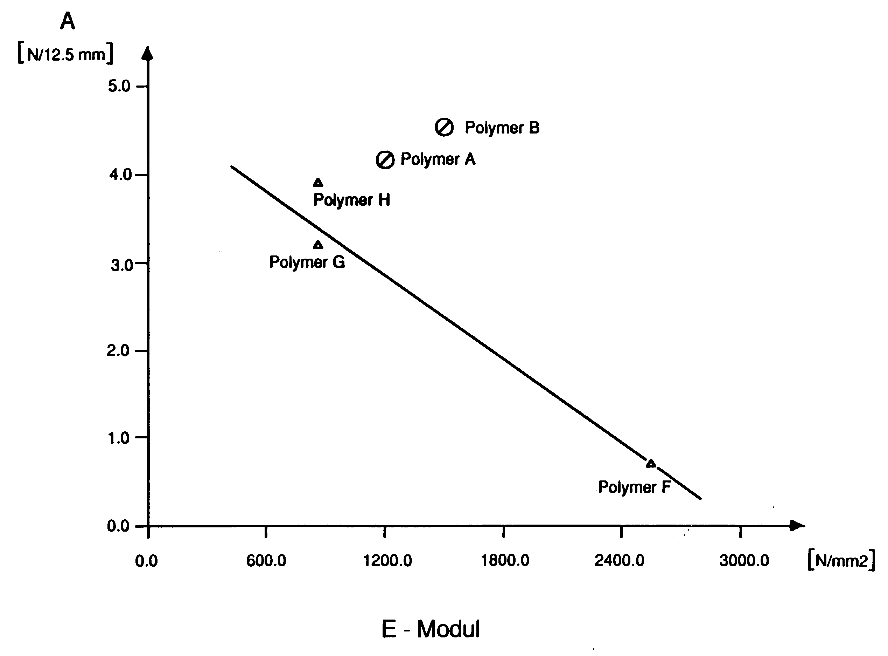

Die erfindungsgemäßen Polyurethane besitzen gegenüber vergleichbaren Produkten bei entsprechendem E-Modul eine wesentlich größere Haftung A zu Polyesterfolien und umgekehrt (Figur 1).

Die Bestimmung der Haftung erfolgt gemäß DIN 53289. Die Polyurethane sind dabei mit einem Polyisocyanat vernetzt worden. Die zugegebene Menge entspricht der OH-Zahl, die sich aus der zugegebenen Menge des Aminoalkohols bei der Synthese des Polyurethans ergibt.

Die Verwendung der erfindungsgemäßen Polyurethane führt zu einer Verbesserung des Dispergiergrads der Dispersionen (Tab. 1).

**Tabelle 1**

| | Glanz |
|---|---|
| Dispersion A | 99 |
| Dispersion C | 76 |
| Dispersion D | 74 |

An den für den Videobereich vorgesehenen magnetischen Aufzeichnungsträgern wurden auf einen VHS-Recorder der Firma Victor Company of Japan gegen das Bezugsband BRV 84 (OdB) folgende Messungen durchgeführt:
(1) Videopegel (Luminanzsignal): Luminanzsignal eines 100 % Weißbildes, gemessen mit dem Störspannungsmesser UPSF der Firma Rohde und Schwarz (> 100 kHz).
(2) Videostörabstand (Video-S/N): Verhältnis des Luminanzsignals eines 100 % Weißbildes zum Rauschpegel, gemessen mit dem Störspannungsmesser UPSF der Firma Rohde und Schwarz (> 100 kHz).
(3) Farbstörabstand (Farb S/N): Verhältnis des Farbsignals einer Rotfläche zum Rauschpegel, gemessen mit dem Störspannungsmesser UPSF der Firma Rohde und Schwarz (100 kHz - 3 MHz).
(4) Dauerlauf im Feuchtklima: Im VHS-Recorder werden die Cassetten einem Dauerbetrieb von 100 Zyklen à 2 Stunden einem Klima von 40°C und 85 % rel. Feuchte unterworfen. Der während dieser Zeit aufgetretene Abschliff an den Videoköpfen wird in µm pro 100 Stunden Betrieb angegeben.
(5) Die Haftfestigkeit der Magnetschicht wurde gemäß ECMA-Norm Nr. 120, Punkt 5.11, Seite 6 bestimmt. Beim Messen der Schälfestigkeit wird ein Band folienseitig, unter einem definierten Winkel über eine scharfkantige Klinge gezogen. Hierbei wird der Bandzug, welcher ständig gemessen wird bis zum Moment des Abschälens der Schicht (über die Klinge), kontinuierlich erhöht. Der Bandzug zum Zeitpunkt der Schichtablösung, ist das Maß für die Schälfestigkeit.

Die Meßergebnisse sind in den Tabellen 2 und 3 angegeben.

**Tabelle 2**

| | Schichthaftung [cN] |
|---|---|
| Dispersion A | 200 |
| Dispersion C | 144 |
| Dispersion D | 85 |

**Tabelle 3**

| | Luminanzsignal | S/N | Farb-S/N | Dauerlauf | Kopfabschliff |
|---|---|---|---|---|---|
| Dispersion A | + 3,4 | + 4,3 | + 2,0 | i.o. | 3 |
| Dispersion B | + 3,2 | + 4,5 | + 1,5 | i.o. | 5 |
| Dispersion D | + 3,6 | + 4,6 | + 2,0 | blockt | - |

## Patentansprüche

1. Magnetische Aufzeichnungsträger, bestehend aus einem nichtmagnetischen Trägermaterial und mindestens einer haftfest darauf aufgebrachten Magnetschicht auf der Basis eines in einem mindestens zu 50 Gew.% aus einem thermoplastischen Polyurethan bestehenden Bindemittel feinverteilten magnetischen Materials, wobei als thermoplastisches Polyurethan ein in Tetrahydrofuran lösliches, isocyanatgruppenfreies, verzweigtes Polyurethan mit gegebenenfalls OH-gruppenhaltigen Harnstoffgruppen an den Kettenenden und einem Molekulargewicht zwischen 40 000 und 200 000 eingesetzt wird, dadurch gekennzeichnet, daß es aus
A. 1 Mol eines Gemisches aus
A1) einem Polydiol mit einem Molekulargewicht zwischen 400 und 4 000 und
A2) einem Polydiol mit einem Molekulargewicht von größer 14 000,
wobei das Molverhältnis der Komponente A1 zu der Komponente A2 größer/gleich 10 ist,
B. 0.3 bis 10 Mol eines Gemisches aus
B1) einem aromatischen Diol und
B2) einem geradkettigen Diol mit 2 bis 10 Kohlenstoffatomen
C. 0,05 bis 0,5 Mol eines Tri- oder Polyols mit 3 bis 10 Kohlenstoffatomen,
D. 1,3 bis 13 Mol eines Diisocyanats mit 6 bis 30 Kohlenstoffatomen und
E. 0,09 bis 2 Mol eines Aminoalkohols mit 2 bis 16 Kohlenstoffatomen und/oder eines OH-gruppenfreien Monoamins mit 2 bis 16 Kohlenstoffatomen
in Lösung hergestellt wird, mit der Maßgabe, daß das Verhältnis der OH-Gruppen der Komponenten A bis C zu den NCO-Gruppen der Komponente D zu den Amingruppen der Komponente E wie 1 zu 1,03 bis 1,3 zu 0,03 bis 0,3 beträgt.

2. Magnetischer Aufzeichnungsträger gemäß Anspruch 1, dadurch gekennzeichnet, daß das in Tetrahydrofuran lösliche, isocyanatgruppenfreie, verzweigte Polyurethan mit OH-gruppenhaltigen Harnstoffgruppen an den Kettenenden mit einem Molekulargewicht zwischen 40 000 und 200 000 mit einem Isocyanat aus der Gruppen der Di-, Tri- und Polyisocyanate und der Isocyanatprepolymere mit einem Molgewicht bis zu 10 000 vernetzt wird.

3. Magnetischer Aufzeichnungsträger gemäß Anspruch 1 oder 2, dadurch gekennzeichnet, daß die Komponente B1) eine Verbindung mit der Formel (I) 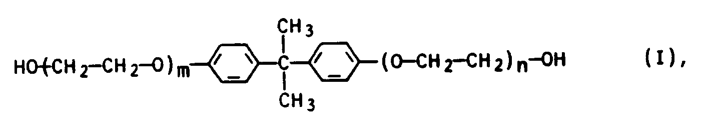 ist, wobei die Werte m und n unabhängig voneinander die Werte 0, 1 oder 2 aufweisen können.

4. Magnetischer Aufzeichnungsträger gemäß Anspruch 1, dadurch gekennzeichnet, daß die OH-Endgruppen zu mehr als 80 % aus einer
-NH-CO-NR²-R¹-OH oder 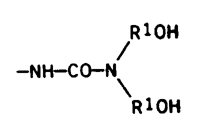 -Gruppe bestehen,
wobei
R¹ = -(CH₂)ₙ-,
R² = H, -CH₃, - (CH₂)ₙ-CH₃ und
n = 1 bis 10
bedeuten.

5. Magnetischer Aufzeichnungsträger gemäß Anspruch 1, 2 oder 3, dadurch gekennzeichnet, daß das in Tetrahydrofuran lösliche, isocyanatgruppenfreie, verzweigte Polyurethan mit OH-gruppenhaltigen Harnstoffgruppen an den Kettenenden als alleiniges Bindemittel eingesetzt wird.

## Claims

1. A magnetic recording medium consisting of a nonmagnetic substrate and at least one magnetic layer which is firmly applied thereon and is based on a magnetic material finely distributed in a binder consisting of not less than 50% by weight of a thermoplastic polyurethane, the thermoplastic polyurethane used being an isocyanatefree, branched polyurethane which is soluble in tetrahydrofuran, has urea groups, which may contain OH groups, at the chain ends and a molecular weight of from 40,000 to 200,000, which is prepared in solution from
A. 1 mole of a mixture of
A1) a polydiol having a molecular weight of from 400 to 4,000 and
A2) a polydiol having a molecular weight greater than 14,000,
the molar ratio of component A1 to component A2 being greater than or equal to 10,
B. from 0.3 to 10 moles of a mixture of
B1) an aromatic diol and
B2) a straight-chain diol of 2 to 10 carbon atoms,
C. from 0.05 to 0.5 mole of a tri- or polyol of 3 to 10 carbon atoms,
D. from 1.3 to 13 moles of a diisocyanate of 6 to 30 carbon atoms and
E. from 0.09 to 2 moles of an amino alcohol of 2 to 16 carbon atoms and/or of an OH-free monoamine of 2 to 16 carbon atoms,
with the proviso that the ratio of the OH groups of components A to C to the NCO groups of component D to the amine groups of component E is 1 : 1.03-1.3 : 0.03-0.3.

2. A magnetic recording medium as claimed in claim 1, wherein the isocyanate-free, branched polyurethane which is soluble in tetrahydrofuran and has OH-containing urea groups at the chain ends and a molecular weight of from 40,000 to 200,000 is crosslinked with an isocyanate from the groups consisting of the di-, tri- and polyisocyanates and of the isocyanate prepolymers having a molecular weight of not more than 10,000.

3. A magnetic recording medium as claimed in claim 1 or 2, wherein the component B1) is a compound of the formula (I) 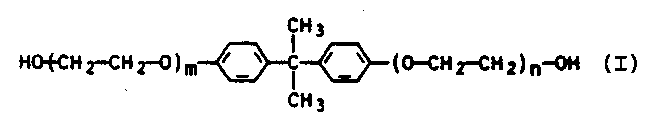 where m and n independently of one another may each be 0, 1 or 2.

4. A magnetic recording medium as claimed in claim 1, wherein more than 80% of the terminal OH groups consist of a
-NH-CO-NR²-R¹-OH oder 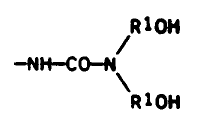 group
where R¹ is -(CH₂)ₙ-, R² is H, -CH₃ or -(CH₂)ₙ-CH₃ and n is from 1 to 10.

5. A magnetic recording medium as claimed in claim 1, 2 or 3, wherein the isocyanate-free branched polyurethane which is soluble in tetrahydrofuran and has OH-containing urea groups at the chain ends is used as the sole binder.

## Revendications

1. Support d'enregistrement magnétique constitué d'un matériau support non magnétique et d'au moins une couche magnétique adhérente appliquée dessus, à base d'un matériau magnétique finement divisé, dans un liant constitué, au moins à 50 % en poids, d'un polyuréthanne thermoplastique, ce dernier étant un polyuréthanne ramifié, sans groupe isocyanate, soluble dans le tétrahydrofuranne, ayant éventuellement aux extrémités de chaîne des groupes urée portant des groupes OH et un poids moléculaire compris entre 40 000 et 200 000, caractérisé par le fait qu'il est préparé en solution à partir de :
A. 1 mol d'un mélange
A1) d'un polydiol d'un poids moléculaire compris entre 400 et 4000 et
A2) d'un polydiol d'un poids moléculaire supérieur à 14 000,
le rapport molaire du composant A1 au composant A2 étant supérieur ou égal à 10
B. 0,3 à 10 mol d'un mélange
B1) d'un diol aromatique et
B2) d'un diol à chaîne droite de 2 à 10 atomes de carbone
C. 0,05 à 0,5 mol d'un tri- ou polyol de 3 à 10 atomes de carbone
D. 1,3 à 13 mol d'un diisocyanate de 6 à 30 atomes de carbone et
E. 0,09 à 2 mol d'un aminoalcool de 2 à 16 atomes de carbone
et/ou une monoamine sans groupe OH, de 2 à 16 atomes de carbone sous réserve que les rapports entre les groupes OH, des composants A à C, les groupes NCO des composants D et les groupes amine du composant E soient les suivants 1/1,03 à 1,3/0,03 à 0,3.

2. Support d'enregistrement magnétique selon la revendication 1, caractérisé par le fait que le polyuréthanne ramifié, sans groupe isocyanate, soluble dans le tétrahydrofuranne, ayant éventuellement aux extrémités de chaîne des groupes urée portant des groupes OH et un poids moléculaire compris entre 40 000 et 200 000 est réticulé avec un isocyanate des groupes des di-, tri- et polyisocyanates et des propolymères d'isocyanate, d'un poids moléculaire allant jusqu'à 10 000.

3. Support d'enregistrement magnétique selon la revendication 1 ou 2, caractérisé par le fait que le composant B1) est une composé de la formule I 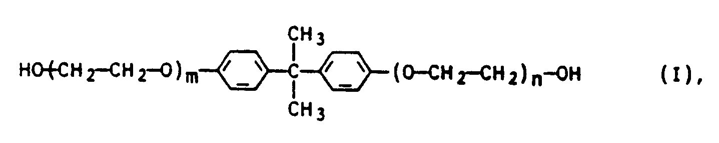 les valeurs de m et n, indépendamment l'une de l'autre, pouvant être 0,1 ou 2.

4. Support d'enregistrement magnétique selon la revendication 1, caractérisé par le fait que les groupes d'extrémité OH sont constitués pour plus de 80 % par un groupe
-NH-CO-NR^{²}-R¹-OH ou 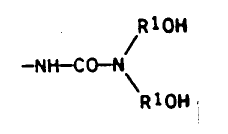 R¹ signifiant : -CH₂)ₙ-
R² = H, -CH₃, -(CH₂)ₙ-CH₃ et
n = 1 à 10

5. Support d'enregistrement magnétique selon la revendication 1, 2 ou 3 caractérisé par le fait que le polyuréthanne ramifié, sans groupe isocyanate, soluble dans le tétrahydrofuranne, ayant éventuellement aux extrémités de chaîne des groupes urée portant éventuellement des groupes OH est utilisé comme unique liant.
